# FASCICULE DE BREVET EUROPEEN

(11) **EP 1 462 609 B1**
(45) Date de publication et mention de la délivrance du brevet: **23.08.2006**
(21) Numéro de dépôt: 04290787.3
(22) Date de dépôt: 24.03.2004
(51) Int. Cl.: F01D 5/14, B23P 15/04, B23K 20/12, F01D 5/18

(54) **Aube allégée de turbomachine et son procédé de fabrication**
Turbomaschinenschaufel mit vermindertem Gewicht und deren Herstellungsweise
Turbomachine blade with reduced weight and it's production method

(30) Priorité: 28.03.2003 FR 0303814
(43) Date de publication de la demande: 29.09.2004
(73) Titulaire: SNECMA, 75015 Paris (FR)
(72) Inventeur: Ferte, Jean-Pierre, 91100 Corbeil-Essonnes (FR); Larrouquere, Denis, 77184 Emerainville (FR); Bour, Jean-Luc, 77190-Dammarie Les Lys (FR)

(56) Documents cités:
- EP-A- 1 132 167
- WO-A-01/49975
- WO-A-03/018976
- FR-A- 889 568
- FR-A- 1 118 892
- FR-A- 2 695 163
- GB-A- 660 007
- US-A- 1 762 352
- US-A- 2 675 208
- US-A- 3 606 580
- US-A- 3 695 778
- US-A1- 2002 108 734
- "FRICTION STIR WELDING CONQUERS AUSTENITIC STAINLESS STEEL" WELDING AND METAL FABRICATION, IPC LTD. HAYWARDS HEATH, GB, vol. 68, no. 10, décembre 2000 (2000-12), pages 16-17, XP000998919 ISSN: 0043-2245

## Description

### Domaine technique de l'invention

L'invention se rapporte aux aubes de turbomachines et plus particulièrement à une structure et à un procédé de fabrication d'aubes métalliques allégées et creuses destinées par exemple aux rotors de compresseurs ou de soufflantes des turboréacteurs à double flux propulsant les avions.

### Etat de la technique et problème résolu par l'invention

Afin de ne pas alourdir la description, les constituants de l'aube sont désignés et référencés de la même façon dans le cas de l'aube ébauchée et dans le cas de l'aube finie.

Les pièces de turboréacteur utilisées en aéronautique doivent combiner des caractéristiques de légèreté, de résistance aux vibrations et de résistance en fatigue élevées C'est le cas en particulier des aubes montées à la périphérie des rotors aubagés de compresseur ou de soufflante. De telles aubes ont des pales très minces qui sont le siège de sollicitations alternées en traction et en compression susceptibles d'en provoquer la rupture par l'apparition et la propagation de fissures sur leurs flancs Par ailleurs, le procédé de fabrication de telles aubes doit être très fiable afin d'espacer au maximum les contrôles qualité.

Pour tenter d'atteindre ce résultat, on met traditionnellement en oeuvre deux technologies alternatives :
La première technologie est divulguée par exemple par le brevet FR 2 688 264 et son correspondant US 5,295,789. L'aube est métallique et comporte sur la face intrados une pluralité d'alvéoles débouchantes et garnies d'un matériau organique de faible densité, l'allégement ainsi obtenu étant directement proportionnel au volume total des alvéoles, la garniture organique assurant la continuité de l'intrados ainsi qu'un rôle d'amortisseur de vibrations. L'inconvénient de cette technologie est qu'un allègement important conduit à augmenter le volume des alvéoles et par répercussion à fragiliser l'aube et à la rendre plus flexible. De plus, les fréquences de résonance de l'aube sont abaissées de sorte que l'amortissement assuré par la garniture décroît. Cet inconvénient est réduit mais non supprimé avec l'aube divulguée par le brevet US 5,634,771, cette aube présentant des nervures agencées pour une meilleure rigidité
La seconde technologie est divulguée par le brevet FR 2 754 478 correspondant au brevet US 5,896,658. L'aube est en deux parties assemblées par soudage diffusion, la surface de jonction entre ces deux parties allant du bord d'attaque au bord de fuite, des traitements anti-diffusion étant appliqués aux endroits de la surface de jonction où seront de futures cavités, les cavités d'allègement étant obtenues par gonflage à chaud après le soudage-diffusion. Cette technologie permet d'obtenir des aubes très performantes, mais le procédé de fabrication présente l'inconvénient d'être long et coûteux.
   Un autre exemple est donné dans le brevet US 1,762,352 dans lequel l'aube est aussi réalisée en deux parties. Elle est obtenue par soudage d'un couvercle dans une emboîture ménagée sur la seconde partie.

Par ailleurs, le brevet FR 2 695 263 correspondant au brevet US 5,346,613 divulgue une aube allégée comportant dans le sens de l'épaisseur une pluralité de trous débouchants et obturés par des bouchons soudés à leur périphérie avec un faisceau à haute énergie tel un faisceau laser ou un faisceau d'électrons. Cette technologie présente cependant l'inconvénient de laisser une quantité de matière importante entre les trous et d'imposer à l'aube un soudage très important puisque chaque couple trou-bouchon doit être soudé sur toute sa périphérie.

On connaît par ailleurs des procédés de soudage performants et donc susceptible d'être utilisés en aéronautique. Ce sont essentiellement le soudage-diffusion précité, le soudage par rayon laser et le soudage par faisceau d'électrons. On connaît également un procédé récent de soudage par friction appelé "Friction Stir Welding" ou "friction par malaxage" consistant à faire tourner un doigt épaulé en alliage réfractaire dans la zone à souder, la chaleur nécessaire au soudage provenant du frottement entre le doigt et la métal de la pièce. Ce procédé est divulgué par exemple par les brevets US 5,829,664 ou US 5,460,317 planches &, 2 et 9 et son correspondant le brevet EP 0 615 480. A noter que pendant le soudage, l'outil de soudage génère des forces très importantes sur la pièce.

Le problème à résoudre est de concevoir une structure et un procédé de fabrication fiable et économique d'aubes allégées, les aubes devant posséder des performances élevées en terme de légèreté et de résistance mécanique.

### Exposé de l'invention

Pour résoudre ce problème, l'invention propose une aube allégée de turbomachine comportant une pale en alliage métallique, cette pale comportant elle-même un bord d'attaque, un bord de fuite, deux flancs, un sommet et une cavité obturée par un couvercle, ce couvercle étant sur l'un des deux flancs appelé flanc creusé, ce couvercle assurant la continuité aérodynamique du flanc creusé, ce couvercle étant lié par le bord au reste de la pale par un cordon de soudure, l'épaisseur du bord du couvercle étant notée EC.
Une telle aube est remarquable en ce que le cordon de soudure débouche sur le flanc creusé et pénètre dans la pale avec une profondeur P au moins égale à l'épaisseur EC du bord du couvercle afin d'assurer la continuité de la matière entre le bord du couvercle et le reste de la pale sur une profondeur au moins égale à l'épaisseur EC du bord du couvercle.
Une telle disposition permet d'augmenter la résistance mécanique et la durée de vie de l'aube. En effet, la continuité de matière élimine toute fente au voisinage du flanc creusé et perpendiculaires à lui pouvant subsister entre le couvercle et le reste de la pale, de telles fentes constituant des amorces de fissures susceptibles de se propager sur le flanc creusé sous l'effet des sollicitations mécaniques siégeant au voisinage du flanc creusé et orientées tangentiellement à ce flanc.

Avantageusement, la largeur LC de la cavité est au moins égale à la moitié de la largeur LP de la pale, la largeur de la pale LP étant prise entre le bord d'attaque et le bord de fuite sur la ligne géométrique neutre passant à mi-distance entre les flancs, la largeur LC de la cavité étant prise entre les surfaces latérales sur la même ligne géométrique neutre. Une telle disposition permet d'obtenir un allègement important avec une seule cavité obturée par un seul couvercle, ce qui réduit la quantité de soudure à faire, et par répercussion le coût de la pièce.

Avantageusement, le cordon de soudure est obtenu par la rotation d'un doigt pénétrant depuis le flanc creusé entre le couvercle et le reste de la pale.
Bien que ce procédé de soudage connu appelé "Friction Stir Welding" génère pendant le soudage des efforts mécaniques très importants alors que la pale d'une aube est une pièce mince peu apte en soi à résister à de tels efforts, ce type de soudage est paradoxalement applicable dans le cas présent en mettant en oeuvre le procédé décrit plus loin. Ce type de soudage est particulièrement intéressant car il offre une grande qualité de soudure et une excellente reproductibilité permettant d'espacer les contrôles.

L'invention propose également un procédé pour fabriquer une telle aube, ce procédé comportant les opérations suivantes :
a. réalisation d'une ébauche de la pale, par exemple par forgeage ou par fonderie
b. creusement de la cavité dans le flanc creusé, par exemple par fraisage ;
c. creusement d'une emboîture dans le flanc creusé, cette emboîture bordant la cavité, cette emboîture comportant une surface d'appui et une surface latérale, cette emboîture pouvant également être fraisée ,
d. réalisation d'un couvercle comportant une surface externe à la forme du flanc creusé, ce couvercle pouvant par exemple être obtenu par découpage et formage d'une tôle
e. introduction du couvercle dans l'emboîture et soudage des bords du couvercle au reste de la pale sur le flanc creusé, le soudage étant effectué avec une profondeur P au moins égale à l'épaisseur EC des bords du couvercle, ce soudage pouvant être effectué par exemple par faisceau laser en atmosphère neutre ou sous vide par faisceau d'électrons ;
f. finition de l'aube, par exemple par fraisage, meulage et ponçage.

Avantageusement, le soudage est effectué avec une machine de soudage par friction du type "Friction Stir Welding", cette machine comportant une table et une broche susceptibles de déplacements relatifs selon trois degrés de liberté en translation et deux degrés de liberté en rotation, la broche entraînant en rotation un outil de soudage selon un axe géométrique de rotation, l'outil de soudage comportant un doigt faisant saillie sur un épaulement, l'ébauche étant disposée dans un berceau attaché à la table, ce berceau comportant une surface d'appui de forme complémentaire au flanc opposé de l'ébauche, l'ébauche arrivant en appui par son flanc opposé à ladite surface d'appui, ce berceau comportant également des butées entourant l'ébauche pour positionner latéralement celle-ci dans le berceau, le couvercle étant introduit dans l'emboîture, l'ensemble constitué par l'ébauche et le couvercle étant maintenu par une pluralité de brides commandées à distance, le doigt en rotation étant enfoncé dans le flanc creusé entre les bords du couvercle et le reste de la pale, l'épaulement affleurant alors le flanc creusé, chaque bride commandée étant rétractée au passage de l'outil de soudage afin de ne pas interférer avec lui.
Un tel procédé permet de souder par friction les couvercles sur les pales malgré les forces importantes exercées sur la pale par l'outil de soudage et la minceur et la flexibilité de la pale et du couvercle. Les aubes étant très sollicitées en exploitation, ce procédé permet par conséquent d'obtenir des soudures de haute qualité aptes à prolonger la durée de vie des aubes

### Description des figures

L'invention sera mieux comprise et les avantages qu'elle apporte apparaîtront plus clairement au vue d'un exemple détaillé de réalisation et des figures annexées :
La figure 1 illustre une aube selon l'invention vue en perspective.
La figure 2 illustre cette même aube par une coupe transversale selon AA sur la figure 1.
La figure 3 illustre par une vue agrandie le cordon de soudure entre le couvercle et le reste de la pale.
La figure 3a illustre par une vue agrandie l'amorce de fissuration et les éventuelles fissures provoquées par un cordon de soudure de profondeur insuffisante.
La figure 4 illustre le couvercle et l'ébauche de l'aube avant l'assemblage.
Le figure 5 illustre le soudage du couvercle sur le corps de l'aube.
La figure 6 illustre par une vue agrandie la zone de soudage et l'outil de soudage.
La figure 7 illustre une autre forme de l'aube selon l'invention, cette aube comportant deux cavités, deux couvercles et une âme centrale.
La figure 8 illustre sous une forme schématique une aube avec un sommet ouvert, un cordon de soudure en U et un prolongement unique du sommet.
La figure 9 illustre sous une forme schématique une aube avec un sommet fermé.
La figure 10 illustre sous une forme schématique une aube avec une nervure centrale soudée au couvercle.
A noter que par mesure de clarté, les aubes vues en coupe sur les figures 2, 4 5 et 7 sont représentées sans cambrure et avec une épaisseur fortement agrandie

### Description détaillée

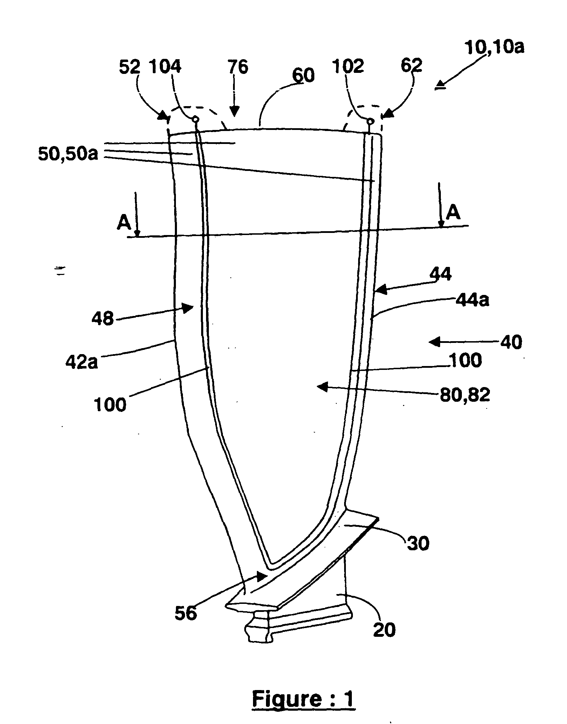

On se reportera en premier lieu a la figure 1. L'aube 10 est un objet bien connu comportant successivement de bas en haut sur la figure 1 un pied 20 par lequel elle est emboîtée dans un rotor non représenté, une plateforme 30 et une pale 40. La pale 40 est mince et cambrée. La pale 40 est délimitée latéralement vers l'avant par un bord arrondi appelé bord d'attaque 42, vers l'arrière par un second bord plus effilé appelé bord de fuite 44 et latéralement par deux flancs 50. On référencera 56 l'embase de la pale 40, c'est à dire la partie de la pale 40 contre la plateforme 30, et on référencera 60 le sommet de la pale 40, c'est à dire l'extrémité de la pale 40 opposée à la plateforme 30 On référencera également 42a la ligne constituant l'extrémité du bord d'attaque 42 et 44a la ligne constituant l'extrémité du bord de fuite 44. La pale 40 est cambrée, c'est à dire qu'elle forme entre le bord d'attaque 42 et le bord de fuite 44 un arc de sorte que l'un des flanc 50 est convexe alors que le flanc opposé est concave, le flanc 50 convexe étant appelé extrados et le flanc 50 concave étant appelé intrados

On défini habituellement la largeur LP de la pale 40 entre l'extrémité 42a du bord d'attaque 42 et l'extrémité 44a du bord de fuite 44 Lorsque la pale 40 est cambrée cette largeur LP est prise le long d'une ligne géométrique 46 dite "neutre" courbe passant à mi-distance entre les deux flancs 50 On défini également l'épaisseur EP de la pale 40 c'est la distance maximale entre les flancs 50, cette épaisseur EP étant de préference mesurée au sommet 60 de la pale 40

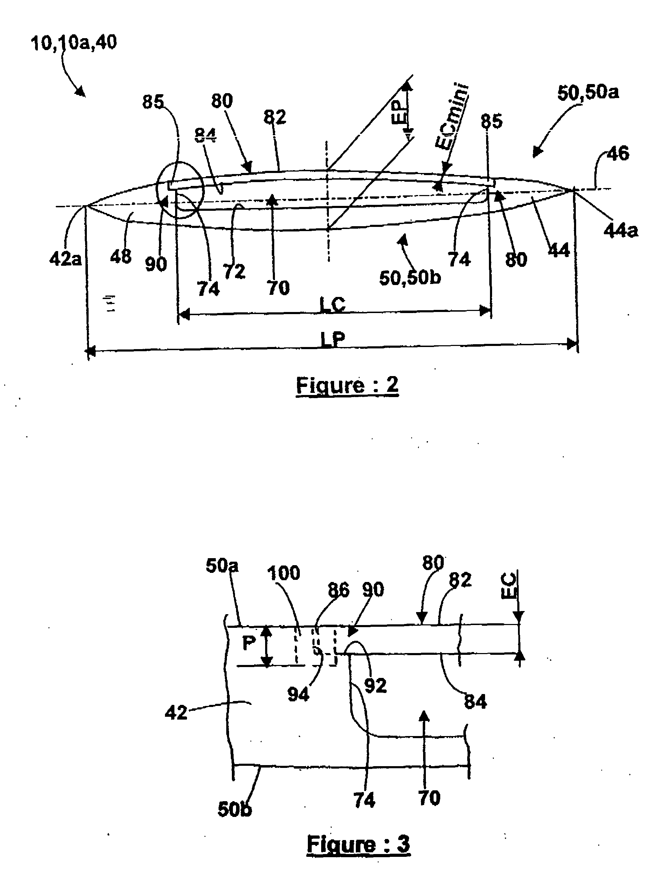

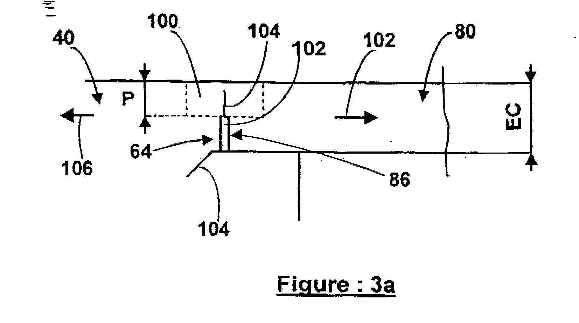

On se reportera maintenant aux figures 2 et 3. La pale 40 comporte dans l'un ce ses flancs 50, appelé flanc creusé 50a, une cavité 70 obturée par un couvercle 80 situé également dans le flanc 50a On référencera 50b le flanc 50 opposé au flanc creuse 50a On référencera également 72 et 74 respectivement le fond et la surface latérale de cette cavité 70. Cette surface latérale 74 longe successivement le bord d'attaque 42, l'embase 56 et le bord de fuite 44 pour former ainsi un U dont les extrémités librés débouchent au sommet 60 de la pale 40, la cavité 70 comportant ainsi une ouverture 76 débouchant sur ce sommet 60. On référencera 82, 84, 85 et 86 respectivement la surface externe, la surface interne, le bord et le chant du couvercle 80. La surface externe 82 du couvercle 80 est à la forme du flanc creusé 50a et constitue par conséquent la partie du flanc creusé 50a au dessus de la cavité 70. La surface interne 84 du couvercle 80 est en regard du fond 72 de la cavité 70

La matière de la pale 40 située entre le fond 72 de la cavité 70 et le flanc opposé 50b constitue un raccordement 110 reliant entre eux le bord d'attaque 42 et le bord de fuite 44. On notera ERₘᵢₙ l'épaisseur minimale du raccordement 110 le couvercle 80 et le raccordement 110 coopèrent pour assurer la rigidité de la pale 40. A cette fin, on donnera au couvercle 80 une épaisseur minimale ECₘᵢₙ au moins égale à 0,5 fois ERₘᵢₙ.

Afin d'obtenir un allègement conséquent de la pale 40, la largeur LC de la cavité 70 est au moins égale à 50% de la largeur LP de la pale, la largeur LC étant mesurée entre les surfaces latérales 74 de la cavité longeant le bord d'attaque 42 et le bord de fuite 44, la largeur LC étant mesurée selon la ligne géométrique neutre 46.

De préférence mais non obligatoirement, le couvercle 80 a une épaisseur minimale ECₘᵢₙ au moins égale à 20% de l'épaisseur EP de la pale 40 afin que ce couvercle participe efficacement à la résistance mécanique de la pale 40.

Le couvercle 80 pénètre dans une emboîture 90 aménagée dans la pale 40 au bord de la cavité 70, cette emboîture 90 formant une marche d'escalier dans la surface latérale 74 de la cavité 70, cette emboîture 90 débouchant sur le flanc 50a dans lequel se trouve la cavité 70 L'emboîture 90 comporte une surface d'appui 92 située dans l'intérieur de la pale 40 à une distance du flanc 50a égale à l'épaisseur EC du bord du couvercle 80, le couvercle 80 reposant sur la face d'appui 92 par sa surface interne 84. En pratique, la surface d'appui 92 est adjacente à la surface latérale 74 de la cavité 70 et parallèle au flanc creusé 50a. L'emboîture 90 comporte également une surface latérale 94 adjacente au flanc creusé 50a, cette surface latérale 94 étant de forme complémentaire au chant 86 du couvercle 80, cette surface latérale 94 formant avec ce chant 86 un jeu limité pour permettre au couvercle 80 de pénétrer dans l'emboîture 90 jusqu'à ce qu'il puisse arriver au contact de la face d'appui 92.
Ainsi :
- la face d'appui 92 de l'emboîture 90 a pour fonction de positionner le couvercle 80 pour que sa surface externe 82 affleure le flanc creusé 50a, c'est à dire que cette surface externe 82 assure la continuité du flanc creusé 50a de façon à ne former avec lui ni creux ni bosse ni décrochement ;
- la face latérale 94 de l'emboîture 90 a pour fonction de positionner le couvercle 80 au dessus de la cavité 70 pour que cette cavité 70 soit entièrement recouverte par le couvercle 80 dans le flanc creusé 50a

La pale 40 comporte également un cordon de soudure 100 dans le flanc creusé 50a et affleurant celui-ci, c'est à dire ne formant avec lui ni creux ni bosse, ce cordon de soudure 100 suivant le bord du couvercle 80 et pénétrant dans la profondeur de la pale 40 avec une profondeur P au moins égale à l'épaisseur EC du bord 85 du couvercle 80, ce cordon de soudure 100 assurant ainsi la liaison par continuité de la matière du bord du couvercle 80 au reste de la pale 40 sur une profondeur égale à l'épaisseur EC du bord du couvercle 80.
Ainsi, le cordon de soudure 100 englobe entièrement la surface latérale 94 de l'emboîture 90 ainsi que le chant 86 en regard de cette surface latérale 94, cette surface latérale 94 et ce chant 86 disparaissant par conséquent dans le cordon de soudure 100 Selon son type, le cordon de soudure 100 peut également englober une partie de la surface d'appui 92 de l'emboîture 90 adjacente à la surface latérale 94 de l'emboîture 90, ainsi qu'une partie identique de la surface interne 84 du couvercle 80 adjacente au chant 86

La continuité de la matière ainsi assurée sur une profondeur au moins égale à l'épaisseur EC du bord du couvercle 85 supprime les amorces de fissurel à proximité du flanc creusé 50a.
Dans la figure 3a au contraire illustrant l'art antérieur, le cordon de soudure 100 a une profondeur P inférieure à l'épaisseur EC du bord 85 du couvercle 80. De ce fait, une partie 86a du chant 86 et une partie 94a de la surface latérale 94 ne sont pas liées et forment alors une amorce de fissuration 102 susceptible de dégénérer en fissures 104 se propageant vers le flanc creusé 50a et en sens opposé dans l'intérieur de la pale 40 sous l'effet des contraintes 106 tangentielles au flanc creusé 50a

Dans cet exemple de mise en oeuvre de l'invention, la cavité 70 débouche sur le sommet 60 de la pale 40. Le cordon de soudure 100 a par conséquent une forme ouverte en U partant et aboutissant au sommet 60. Cette forme en U du cordon de soudure 100 est illustré par la figure 1. Cette ouverture permet d'alléger la pale 40 à son sommet 60 et par répercussion d'alléger le rotor complet et de réduire efficacement son moment d'inertie, car cette matière, que l'invention permet de supprimer au sommet 60 de la pale 40, présente un moment d'inertie maximal sur le rotor aubagé. Cette ouverture est sans conséquences sur l'équilibrage du rotor car la force centrifuge provoquée par la rotation du rotor aubagé empêche les corps étrangers de pénétrer dans la cavité 70 ou expulse ceux qui auraient pu pénétrer dans cette cavité lorsque le rotor aubagé était au repos

La soudure 100 peut être obtenue par brasage. Dans ce cas, la surface latérale 94 de l'emboîture 90 ainsi que le chant 86 en regard de cette surface latérale 94 sont physiquement conservées.
La soudure 100 peut être également obtenue par fusion avec un faisceau d'électrons ou un faisceau laser.

Dans un mode préféré de réalisation toutefois, la soudure 100 est obtenue par le procédé "Friction Stir Welding" ou soudage par friction à l'aide d'un outil de soudage rotatif en forme de doigt pénétrant depuis le flanc creusé 50a entre le couvercle 80 et le reste de la pale 40, la rotation du doigt dans le métal des pièces à souder apportant la chaleur nécessaire au soudage. En effet, les inventeurs ont constaté que ce type de soudure réunissait deux qualités :
- La soudure 100 est parfaitement homogène et ne comporte pas d'inclusions ou absences de matière susceptibles de constituer des amorces de ruptures.
- La soudure 100 est assurée de façon fiable et reproductible ne nécessitant plus que des contrôles destructifs très espacés
Les inventeurs expliquent l'excellente homogénéité et reproductibilité de la soudure de la façon suivante sous l'effet de la chaleur dégagée, le métal autour du doigt en rotation est porté à l'état plastique et suit un mouvement tourbillonnaire autour de ce doigt avec un gradient de vitesse décroissant lorsque l'on s'éloigne du doigt, un tel mouvement provoquant le mélange des métaux du couvercle et du reste de la pale ainsi que la résorption des porosités et retassures habituelles dans le cas du soudage de pièces par fusion de l'alliage.

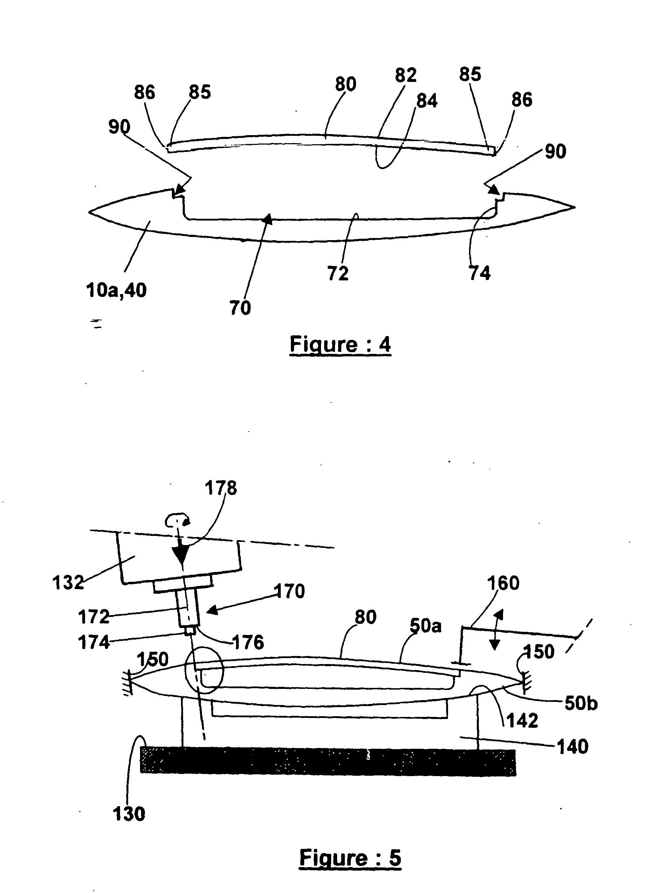

Nous allons maintenant décrire un exemple détaillé de procédé pour réaliser une aube selon l'invention. On se reportera pour cela simultanément aux figures 4, 5 et 6. Ce procédé comporte les opérations suivantes :
a. Réaliser une ébauche10a de l'aube 10 complète, c'est à dire avec le pied 20, la plateforme 30 et la pale 40. La pale 40 de l'ébauche 10a est cambrée à sa forme définitive. Par ébauche, on entend la pièce à la forme de l'aube finie, mais avec un dimensionnement moins précis et une surépaisseur de matière qui sera enlevée ensuite par des opérations de finition. Selon les matériaux mis en oeuvre, cette ébauche 10a peut être réalisée par les procédés habituels de forgeage et d'usinage ou par moulage en fonderie. L'ébauche 10a comporte au sommet 60 au moins un prolongement 62 représenté en traits discontinu sur la figure 1, ce prolongement 62 étant situé en dehors de ce qui sera l'aube 10 définitive, ce prolongement 62 permettant de réaliser l'amorce 102 et la terminaison 104 du cordon de soudure 100 en dehors de ce qui deviendra l'aube définitive 10 En d'autres termes, l'amorce 102 et la terminaison 104 du cordon de soudure 100 sont dans le prolongement 60 et par conséquent à l'extérieur de ce que sera l'aube finie 10, afin que les irrégularités de matière à cette amorce 102 et à cette terminaison 104 ne soient pas dans l'aube finie 10. Dans cet exemple, le cordon de soudure 100 a la forme d'un U et deux prolongements discrets 62 ont été prévues sur le sommet 60 : l'un pour l'amorce 102 et l'autre pour la terminaison 104 du cordon de soudure 100.
b. Usiner la cavité 70 dans le flanc creusé 50a de l'ébauche 10a, cette cavité 90 débouchant dans le flanc creusé 50a et également au sommet 60, l'usinage pouvant être effectué par exemple par fraisage selon les techniques habituelles. On usinera ainsi par fraisage le fond 72 et la surface latérale 74 de la cavité 70.
c. Usiner l'emboîture 90 dans l'angle de matière constitué par la surface latérale 72 de la cavité 70 et le flanc creusé 50a. L'usinage peut être effectué par exemple par fraisage selon les techniques habituelles On usinera ainsi par fraisage la surface d'appui 92 et la surface latérale 94 de cette emboîture 90.
d Réaliser le couvercle 80 par découpage dans une tôle à la forme de l'emboîture 90 et par cambrage à la forme du flanc creusé 50a de l'ébauche L'épaisseur EC des bords du couvercle est égale à la profondeur de l'emboîture 90 dans le flanc creusé 50a, c'est à dire à la distance entre la surface d'appui 92 et ce flanc creusé 50a, afin que la surface externe 82 du couvercle soit dans le prolongement du flanc creusé 50a et puisse constituer celui-ci au dessus de la cavité 70. On laissera un jeu limité, soit en pratique de 0,2mm à 0,5mm, pour que le couvercle 80 puisse s'emboîter sans difficulté dans l'emboîture 90 et arriver au contact de la surface d'appui 92. Ce jeu reste cependant limité car il provoque pendant le soudage un manque de matière devant être compensé par une surépaisseur 180 de matière sur le flanc creusé 50a et sur la surface externe 82 du couvercle 80.
   Ainsi, l'emboîture 90 et le couvercle 80 sont dimensionnés pour que le couvercle 80 puisse être introduit dans l'emboîture 90 et mis en appui par sa surface interne 84 contre la surface d'appui 92 pour que la surface externe 82 soit dans le prolongement du flanc creusé 50a, la surface latérale 94 de l'emboîture 90 entourant le couvercle 80 et positionnant celui-ci au dessus de la cavité 70 pour recouvrir cette cavité 70 dans le flanc creusé 50a ;
e. Disposer ensuite l'ébauche 10a à plat dans un berceau 140 sur la table 130 d'une machine de soudage par friction non représentée, le flanc opposé 50b reposant sur une face d'appui 142 du berceau 140, l'ébauche 10a étant entourée latéralement par des butées 144 pour positionner l'ébauche 10a au dessus de la face d'appui 142 du berceau 140 Disposer ensuite le couvercle 80 dans l'emboîture 90 et brider l'ensemble ébauche 10a + couvercle 80 dans le berceau 140. Le berceau 140 présente ainsi le flanc creusé 50a et le couvercle 80 face à un outil de soudage 170 tournant selon un axe géométrique de rotation 172. L'outil de soudage 170 comporte successivement en partant de son extrémité un doigt 147 adjacent à un épaulement tourné vers son extrémité, le doigt 147 et l'épaulement 176 étant coaxiaux selon l'axe géométrique de rotation 172.

5. Réaliser ensuite le cordon de soudure 100 en mettant l'outil de soudage 140 en rotation et en faisant suivre à cet outil une trajectoire dans l'espace appropriée pour que le doigt en rotation 174 pénètre dans le flanc creusé 50a entre le bord du couvercle 80 et l'ébauche 10a, l'épaulement 176 affleurant le flanc creusé 50a, l'outil de soudage 170 partant du sommet 60 de la pale 40 et faisant ainsi le tour du couvercle 80 dans le flanc creusé 50a.

A noter que pendant le soudage, l'axe géométrique de rotation 172 de l'outil de soudage 170 suit dans l'espace une trajectoire appropriée pour passer sensiblement entre la surface latérale 94 de l'emboîture 90 et le chant 86 du couvercle 80, cet axe géométrique de rotation 172 arrivant dans la surface d'appui 142 du berceau 140 et y définissant un chemin non référencé, cette surface d'appui 142 étant sensiblement au contact de la pale 40 au moins au voisinage de ce chemin. Ceci permet au berceau 140 de reprendre la force de pénétration 178 sans provoquer de flexions sur la pale 40 et le couvercle 80.

6. Finir l'aube, c'est à dire : usiner le sommet 60 et le reste de l'aube 10 par les méthodes habituelles : meulage, fraisage, ponçage etc. le ou les prolongements 62.

La machine de soudage utilisée est du type dit "cinq axes" à commande numérique, c'est à dire que les déplacements relatifs de la broche 132 de la machine par rapport à la table 130 peuvent s'effectuer selon trois axes en translation et deux axes en rotation, ces déplacements étant commandés par un programme d'ordinateur, la broche entraînant en rotation l'outil de soudage 170 selon son axe géométrique de rotation 172 pour provoquer le friction de cet outil contre la pièce à souder

Le doigt 174 a une longueur suffisante sous l'épaulement 176 pour que la profondeur P du cordon de soudure 100 soit supérieure à l'épaisseur EC au bord 85 du couvercle 80. De ce fait, le chant 86 du couvercle 80, la surface latérale 94 de l'emboîture 90 ainsi que l'espace formé par le jeu qu'ils constituent entre eux disparaissent dans le cordon de soudure 100 en formation, ces espaces en forme de fentes sensiblement perpendiculaires au flancs creusé 50a étant assimilables à des fissures susceptibles de se propager et de provoquer la rupture de l'aube sous l'effet des sollicitations alternées sur le flanc creusé 50a, comme cela est illustré par la figure 3a.

### En pratique :

Pendant le soudage, l'outil de soudage 170 provoque dans la pièce une force de pénétration 178 importante localisée sensiblement selon l'axe géométrique de rotations 172. De ce fait, on donnera à la face d'appui 142 une forme appropriée pour supporter l'ébauche 10a au droit du cordon de soudure 100 à réaliser En d'autre termes, l'axe géométrique de rotation 172 passe par cette face d'appui 142 pendant tout le soudage Avec cette disposition, la force de pénétration 178 est transmise à la face d'appui 142 par une simple compression de l'ébauche 10a et du couvercle 80, sans provoquer de flexions de ces deux pièces qui sont très minces.

Pendant le soudage également, l'outil de soudage 170 provoque une force tangentielle au flanc creusé 50a et un couple important qui sont susceptibles de déformer et de déplacer latéralement d'une part l'ébauche 10a par rapport à la face d'appui 142 du berceau 140 et d'autre part le couvercle 80 par rapport à l'ébauche 10a.
De ce fait, les butées 144 sont disposées pour positionner l'ébauche 10a avec une bonne précision, par exemple à moins de 1 mm. Ces butées auront une résistance suffisante pour reprendre les forces engendrées par le soudage par friction et une largeur suffisante pour répartir les efforts le long du bord d'attaque 42 et le long du bord de fuite 44 sans les marquer ou les déformer.
De ce fait également, l'ébauche 10a et le couvercle 80 sont immobilisés dans le berceau 140 par des brides 160 appuyant simultanément sur le flanc creusé 50a et sur le bord du couvercle 80. Cette disposition a pour effet de pincer l'ébauche 10a entre les brides 160 et la face d'appui 142 du berceau 140 de sorte que cette ébauche 10a est soumise à une compression simple permettant une force d'immobilisation très importante sans provoquer de flexions susceptibles de la déformer.
De la même manière, cette disposition a pour effet de pincer les bords du couvercle 80 et l'ébauche 10a entre les brides 160 et la face d'appui 142 du berceau 140, de sorte que cette ébauche 10a et ce couvercle 80 sont soumis à une compression simple permettant une force d'immobilisation très importante sans provoquer de flexions susceptibles de les déformer.
De telles brides seront actionnées à distance par exemple par des vérins hydrauliques, ces brides étant escamotées au moment du passage de l'outil de soudage afin de ne pas interférer avec lui, ces brides étant ensuite remise en position serrée pour maintenir l'ébauche et le couvercle pendant que le soudage se poursuit.

Ce type de soudage provoque cependant des irrégularités à la surface de la pièce et globalement une légère dépression provenant de l'absence de matière correspondant aux espaces et jeux inévitables entre les pièces à souder. Cette dépression n'est généralement pas supérieure à la surépaisseur de matière de l'ébauche 10a, cette surépaisseur étant enlevée par meulage et ponçage pendant les opérations de finition Dans le cas où cette surépaisseur serait insuffisante, il y a lieu de constituer un bossage 180 de 0,2 à 0,5mm sur le flanc creusé 50a, ce bossage 180 longeant l'ébauche 10a ce bossage 180 apportant un supplément de matière et étant ensuite enlevé au moment de la finition de la pale 40.

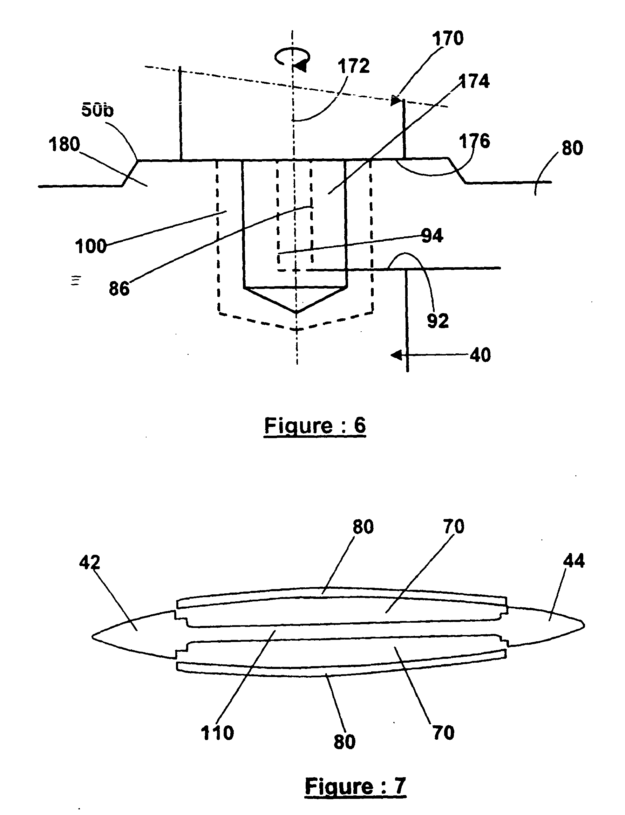

On se reportera maintenant à la figure 7. Dans une forme particulière de mise en oeuvre de l'invention, l'aube 10 comporte une cavité 70 sur chacun des flancs 50 de la pale 40, chaque cavité 40 étant obturée par un couvercle 80, chaque couvercle 80 étant lié au reste de la pale 40 par un cordon de soudure 100. Dans ce cas par conséquent, le raccordement 110 entre le bord d'attaque 42 et le bord de fuite 44 occupe une position centrale entre les deux cavités 70.

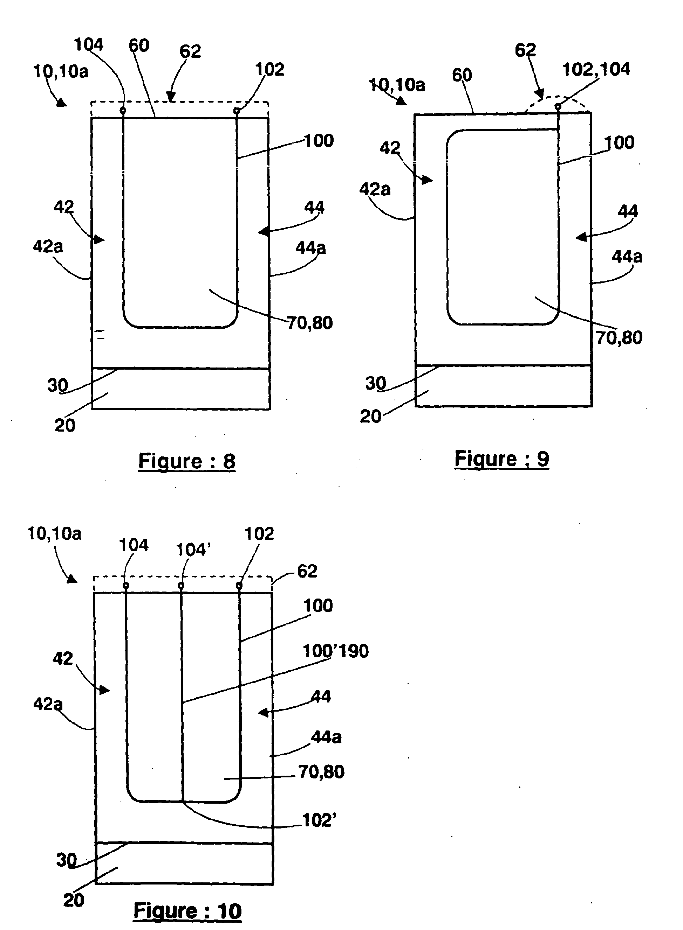

On se reportera maintenant à le figure 8. Dans une forme particulière de mise. En oeuvre de l'invention, le prolongement 62 est unique et englobe à la fois l'amorce 102 et la terminaison 104 du cordon de soudure 100.

On se reportera maintenant à la figure 9. Dans une autre forme de mise en oeuvre de l'invention, le sommet 60 de l'aube 10 est fermé. En d'autres termes, la cavité 70 sous le couvercle 80 ne débouche pas sur le sommet 60. Dans ce cas, l'amorce 102 et la terminaison 104 du cordon de soudure 100 sont confondus ou situés sensiblement au même endroit sur le prolongement 62, ce cordon de soudure 100 suivant toute la périphérie du couvercle 80 et décrivant de ce fait une boucle fermée.

On se reportera maintenant à la figure 10 Dans une autre forme de mise en oeuvre de l'invention, le sommet 60 étant ouvert, la cavité 70 comporte une nervure médiane 190 soudée au couvercle 80 et illustrée en traits discontinu sur la figure 5. La nervure médiane 190 relie par conséquent au couvercle 80 le fond 72 de la cavité 70 et améliore ainsi la rigidité de la pale 40 dans le sens de son épaisseur La nervure médiane 190 est sensiblement équidistante des surfaces latérales 74 adjacentes au bord d'attaque 42 et au bord de fuite 44, cette nervure médiane 190 partant de la surface 74 près du pied 20, donc à la base de la forme en U, la nervure médiane 190 remontant jusqu'au sommet 60 Le couvercle 80 est soudé également sur la nervure médiane 190 par un cordon de soudure dit "médian" 100' dont l'amorce 102' est située sur le cordon de soudure 100 à la base de la forme en U, la terminaison 104' du cordon de soudure médian 100' étant dans le prolongement 62. En pratique, on commencera par réaliser le cordon de soudure médian 100', son amorce 102' étant au dessus de la nervure médiane 190 et sur la base de la forme en U, ce cordon de soudure médian 100' suivant la nervure médiane 190, sa terminaison 104' étant dans le prolongement 62. On réalisera ensuite le cordon de soudure 100 en suivant les bords du couvercle et en passant par l'amorce 102' du cordon de soudure médian 100' afin de résorber les éventuelles irrégularités de la matière à l'amorce 102' du second cordon de soudure 100'.

## Revendications

1. Procédé de réalisation d'une aube allégée de turbomachine comportant les opérations suivantes :
a. réalisation d'une ébauche (10a) d'une pale (10);
b. creusement d'une cavité (70) dans un flanc appelé flanc creusé (50a);
c. creusement d'une emboîture (90) dans le flanc creusé (50a), cette emboîture (90) bordant la cavité (70) et comportant une surface d'appui (92) et une surface latérale (94);
d. réalisation d'un couvercle (80) comportant une surface externe (82) à la forme du flanc creusé (50a) et une surface interne (84) opposée à la surface externe (82), l'emboîture (90) et le couvercle (80) étant dimensionnés pour que le couvercle (80)puisse être introduit dans l'emboîture (90) et mis en appui par sa surface interne (84) contre la surface d'appui (92) pour que la surface externe (82) soit dans le prolongement du flanc creusé (50a), la surface latérale (94) de l'emboîture (90)entourant le couvercle (80)et positionnant celui-ci au dessus de la cavité (70) pour recouvrir cette cavité (70) dans le flanc creusé (50a);
e. introduction du couvercle (80) dans l'emboîture (90) et soudage des bords (85)du couvercle (80) au reste de la pale (40) sur le flanc creusé (50a), le soudage étant effectué par la rotation d'un outil (132), comportant un doigt (174) et un épaulement (176), pénétrant depuis le flanc creusé (50a) entre le couvercle (80) et le reste de la pale (40) jusqu'au contact de l'épaulement avec le flanc creusé (50a) et le couvercle (80), l'outil (132) étant ensuite déplacé de long de la trajectoire de soudage, et **en ce que** le cordon de soudure (100) pénètre dans la pale (40) avec une profondeur P au moins égale à l'épaisseur EC du bord du couvercle (85) afin d'assurer la continuité de la matière entre le bord du couvercle (85) et le reste de la pale (40) sur une profondeur au moins égale à l'épaisseur EC des bords (85) du couvercle (80);
f. finition de l'aube (10).

2. Procédé selon la revendication 1, **caractérisé en ce que** le soudage est effectué avec une machine de soudage par friction, cette machine comportant une table (130) et une broche (132) susceptibles de déplacements relatifs selon trois degrés de liberté en translation et deux degrés de liberté en rotation, la broche (132) entraînant en rotation un outil de soudage (170) selon un axe géométrique de rotation (172), l'outil de soudage (170) comportant un doigt (174) faisant saillie sur un épaulement (176), l'ébauche (10a) étant disposée dans un berceau (140) attaché à la table (130), ce berceau (140) comportant une surface d'appui (142) de forme complémentaire au flanc opposé (50b) de l'ébauche (10a), l'ébauche (10a) arrivant en appui par son flanc opposé (50b) à ladite surface d'appui (142), ce berceau (140) comportant également des butées (150) entourant l'ébauche (10a) pour positionner latéralement celle-ci dans le berceau (140), le couvercle (80) étant introduit dans l'emboîture (90), l'ensemble constitué par l'ébauche (10a) et le couvercle (80) étant maintenu par une pluralité de brides (160) commandées à distance, le doigt (174) en rotation étant enfoncé dans le flanc creusé (50a) entre les bords (85) du couvercle et le reste de la pale (40), l'épaulement (176) affleurant alors le flanc creusé (50a), chaque bride commandée (160) étant rétractée au passage de l'outil de soudage (100) afin de ne pas interférer avec lui.

3. Procédé selon l'une quelconque des revendications 1 ou 2, **caractérisé en ce que** l'ébauche (10a) comporte au sommet (60) au moins un prolongement (62) situé en dehors de ce qui sera l'aube (10) définitive, l'amorce (102à et la terminaison (104) du cordon de soudure (100) étant dans le prolongement (62).

4. Procédé selon l'une quelconque des revendications 1 à 3, le sommet (60) étant ouvert, la cavité (70) comportant une nervure médiane (190) soudée au couvercle (80) par un cordon de soudure médian (100') dont l'amorce est référencée (102'), **caractérisé en ce que** l'amorce (102') du cordon de soudure médian (100') est sur le cordon de soudure (100) et **en ce que** le cordon de soudure médian (100') est réalisé préalablement au cordon de soudure (100).

5. Aube allégée de turbomachine obtenue par le procédé selon l'une des revendications 1 à 4.

## Claims

1. Process for producing a lightened turbomachine blade, which comprises the following operations:
a) production of a blank (10a) of an airfoil (10);
b) cutting of a cavity (70) into one side, called the hollowed side (50a);
c) cutting of a socket (90) in the hollowed side (50a), this socket (90) bordering the cavity (70) and having a bearing surface (92) and a lateral surface (94) ;
d) production of a cover (80) having an external surface (82) with the shape of the hollowed side (50a) and an internal surface (84) opposite the external surface (82), the socket (90) and the cover (80) being dimensioned so that the cover (80) can be inserted into the socket (90) and bear via its internal surface (84) against the bearing surface (92) so that the external surface (82) lies in the extension of the hollowed side (50a), the lateral surface (94) of the socket (90) surrounding the cover (80) and positioning the latter above the cavity (70) in order to cover this cavity (70) in the hollowed side (50a);
e) insertion of the cover (80) into the socket (90) and welding of the edges (85) of the cover (80) to the rest of the airfoil (40) on the hollowed side (50a), the welding being carried out by the rotation of a tool (132), having a finger (174) and a shoulder (176), penetrating from the hollowed side (50a) between the cover (80) and the rest of the airfoil (40) until contact of the shoulder with the hollowed side (50a) and the cover (80), the tool (132) then being moved along the welding path, and the weld bead (100) penetrates into the airfoil (40) to a depth P at least equal to the thickness EC of the edge of the cover (85) so as to provide continuity of material between the edge of the cover (85) and the rest of the airfoil (40) over a depth at least equal to the thickness EC of the edges (85) of the cover (80); and
f) finishing of the blade (10).

2. Process according to Claim 1, **characterized in that** the welding is carried out by a friction welding machine, this machine comprising a table (130) and a spindle (132) that are capable of relative displacements along three degrees of translational freedom and two degrees of rotational freedom, the spindle (132) causing a welding tool (170) to rotate about a geometrical axis of rotation (172), the welding tool (170) having a finger (174) projecting from a shoulder (176), the blank (10a) being placed in a cradle (140) attached to the table (130), this cradle (140) having a bearing surface (142) of shape complementary to the facing side (50b) of the blank (10a), the blank (10a) bearing via its side (50b) facing said bearing surface (142), this cradle (140) also having stops (150) surrounding the blank (10a) in order to position the latter laterally in the cradle (140), the cover (80) being inserted into the socket (90), the whole assembly formed by the blank (10a) and the cover (80) being held in place by a number of remotely controlled clamps (160), the rotating finger (174) being pushed into the hollowed side (50a) between the edges (85) of the cover and the rest of the airfoil (40), the shoulder (176) then being flush with the hollowed side (50a), each controlled clamp (160) being retracted upon passage of the welding tool (100) so as not to interfere with the latter.

3. Process according to either of Claims 1 and 2, **characterized in that** the blank (10a) has, at the tip (60), at least one extension (62) located in a region beyond that which the final blade (10) will occupy, the start (102) and the end (104) of the weld bead (100) being in the extension (62).

4. Process according to any one of Claims 1 to 3, with the tip (60) being open and the cavity (70) having a central rib (190) welded to the cover (80) by a central weld bead (100'), the start of which is referenced (102'), **characterized in that** the start (102') of the central weld bead (100') is on the lateral weld bead (100) and **in that** the central weld bead (100') is produced prior to the weld bead (100).

5. Lightened turbomachine blade obtained by the process according to one of Claims 1 to 4.

## Patentansprüche

1. Verfahren zur Herstellung einer leichteren Turbotriebwerksschaufel, das die folgenden Arbeitsschritte umfasst:
a. Herstellen eines Rohlings (10a) eines Schaufelblatts (10);
b. Ausformen eines Hohlraums (70) in einem Seitenteil, genannt hohles Seitenteil (50a);
c. Ausformen einer Umrandung (90) in dem hohlen Seitenteil (50a), wobei diese Umrandung (90) um den Hohlraum (70) herum verläuft und eine Anlagefläche (92) und eine Seitenfläche (94) aufweist;
d. Ausführen einer Abdeckung (80) mit einer Außenfläche (82) in der Form des hohlen Seitenteils (50a) und einer Innenfläche (84) auf der von der Außenfläche (82) abgewandten Seite, wobei die Umrandung (90) und die Abdeckung (80) dergestalt bemessen sind, dass die Abdeckung (80) in die Umrandung (90) eingesetzt werden kann und mit ihrer Innenfläche (84) in Anlage an die Anlagefläche (92) gebracht werden kann, damit sich die Außenfläche (82) in der Verlängerung des hohlen Seitenteils (50a) befindet, wobei die Seitenfläche (94) der Umrandung (90) die Abdeckung (80) umgibt und diese über dem Hohlraum (70) positioniert, um diesen Hohlraum (70) in dem hohlen Seitenteil (50a) abzudecken;
e. Einsetzen der Abdeckung (80) in die Umrandung (90) und Verschweißen der Ränder (85) der Abdeckung (80) mit dem übrigen Schaufelblatt (40) an dem hohlen Seitenteil (50a), wobei das Schweißen durch das Drehen eines Werkzeugs (132) erfolgt, das einen Finger (174) und einen Absatz (176) aufweist, die von dem hohlen Seitenteil (50a) aus zwischen der Abdeckung (80) und dem übrigen Schaufelblatt (40) so weit eindringen, bis der Absatz den hohlen Seitenteil (50a) und die Abdeckung (80) berührt, woraufhin das Werkzeug (132) entlang der Schweißbahn geführt wird und wobei die Schweißraupe (100) in einer Tiefe P von mindestens gleich der Dicke EC des Abdeckungsrandes (85) in das Schaufelblatt (40) eindringt, um die Kontinuität des Werkstoffs zwischen dem Abdeckungsrand (85) und dem übrigen Schaufelblatt (40) über eine Tiefe von mindestens gleich der Dicke EC der Ränder (85) der Abdeckung (80) zu gewährleisten;
f. Endbearbeitung der Schaufel (10).

2. Verfahren nach Anspruch 1,
**dadurch gekennzeichnet,**
**dass** das Schweißen mit einer Reibschweißmaschine erfolgt, wobei diese Maschine einen Tisch (130) und eine Spindel (132) aufweist, die relative Verschiebungen zueinander vollführen können, und zwar in Vorschubbewegungen mit drei Freiheitsgraden und Drehbewegungen mit zwei Freiheitsgraden, wobei die Spindel (132) ein Schweißwerkzeug (170) gemäß einer geometrischen Drehachse (172) in Drehung versetzt, wobei das Schweißwerkzeug (170) einen Finger (174) aufweist, der über einen Absatz (176) hinausragt, wobei der Rohling (10a) in einem Traggestell (140) angeordnet wird, das an dem Tisch (130) angebracht ist, wobei dieses Traggestell (140) eine Auflagefläche (142) aufweist, deren Form komplementär zu dem gegenüberliegenden Seitenteil (50b) des Rohlings (10a) ist, wobei der Rohling (10a) mit seinem gegenüberliegenden Seitenteil (50b) auf dieser Auflagefläche (142) in Anlage kommt, wobei dieses Traggestell (140) ferner Anschläge (150) aufweist, die um den Rohling (10a) herum angeordnet sind, um diesen seitlich in dem Traggestell (140) zu positionieren, wobei die Abdeckung (80) in die Umrandung (90) eingesetzt wird, die von dem Rohling (10a) und der Abdeckung (80) gebildete Gesamtanordnung durch eine Vielzahl von ferngesteuerten Bügeln (160) festgehalten wird, der in Drehung befindliche Finger (174) zwischen den Rändern (85) der Abdeckung und dem übrigen Schaufelblatt (40) in das hohle Seitenteil (50a) eingesenkt wird, wobei der Absatz (176) dann mit dem hohlen Seitenteil (50a) fluchtet, wobei jeder ferngesteuerte Bügel (160) beim Durchgang des Schweißwerkzeugs (170) zurückgezogen wird, um nicht an dieses zu stoßen.

3. Verfahren nach einem der Ansprüche 1 oder 2,
**dadurch gekennzeichnet,**
**dass** der Rohling (10a) an der Spitze (60) mindestens eine Verlängerung (62) aufweist, die sich außerhalb dessen befindet, was letztendlich die Schaufel (10) wird, wobei sich der Ansatz (102) und der Abschluss (104) der Schweißraupe (100) in der Verlängerung (62) befinden.

4. Verfahren nach einem der Ansprüche 1 bis 3, bei dem die Spitze (60) offen ist, der Hohlraum (70) eine Mittelrippe (190) enthält, die an der Abdeckung (80) mit einer mittleren Schweißraupe (100') angeschweißt ist, deren Ansatz mit der Bezugszahl (102') bezeichnet ist,
**dadurch gekennzeichnet,**
**dass** der Ansatz (102') der mittleren Schweißraupe (100') sich auf der Schweißraupe (100) befindet und dass die mittlere Schweißraupe (100') vor der Schweißraupe (100) ausgeführt wird.

5. Leichtere Turbotriebwerksschaufel, die gemäß dem Verfahren nach einem der Ansprüche 1 bis 4 hergestellt wird.
